# EUROPÄISCHE PATENTSCHRIFT

(11) **EP 1 423 474 B1**
(45) Veröffentlichungstag und Bekanntmachung des Hinweises auf die Patenterteilung: **16.08.2006**
(21) Anmeldenummer: 02772220.6
(22) Anmeldetag: 28.08.2002
(51) Int. Cl.: C08L 23/20, C08L 23/22

(54) **POLYMERZUSAMMENSETZUNG, ENTHALTEND WENIGSTENS EIN MITTELMOLEKULARES REAKTIVES POLYISOBUTEN**
POLYMER COMPOSITION CONTAINING AT LEAST ONE MIDDLE MOLECULAR WEIGHT REACTIVE POLYISOBUTENE
COMPOSITION POLYMERE COMPRENANT AU MOINS UN POLYISOBUTENE REACTIF DE POIDS MOLECULAIRE MOYEN

(30) Priorität: 29.08.2001 DE 10142285
(43) Veröffentlichungstag der Anmeldung: 02.06.2004
(73) Patentinhaber: BASF Aktiengesellschaft, 67063 Ludwigshafen (DE)
(72) Erfinder: LANGE, Arno, 67098 Bad Dürkheim (DE); HÜFFER, Stefan, 67063 Ludwigshafen (DE); LANG, Gabriele, 68167 Mannheim (DE); MACH, Helmut, 69115 Heidelberg (DE); RATH, Hans, Peter, 67269 Grünstadt (DE); SCHAUSS, Eckard, 67259 Heuchelheim (DE)
(74) Vertreter: Reitstötter - Kinzebach
(86) Internationale Anmeldenummer: PCT/EP2002/009608
(87) Internationale Veröffentlichungsnummer: WO 2003/020822

(56) Entgegenhaltungen:
- EP-A- 0 807 641
- EP-A- 0 849 282
- WO-A-01/27172
- WO-A-98/20053
- WO-A-02/092645
- DE-A- 1 920 187

## Beschreibung

Die vorliegende Erfindung betrifft eine Polymerzusammensetzung, enthaltend wenigstens eine Polyisobuten-haltige Komponente auf Basis eines mittelmolekularen reaktiven Polyisobutens und wenigstens ein weiteres, davon verschiedenes Polymer.

Organische Polymere (Kunststoffe) können nach sehr unterschiedlichen Kriterien charakterisiert werden. Eine wichtige Polymerklasse sind Thermoplaste. Thermoplaste sind lineare Polymere, die durch Polyaddition (z. B. Polystyrol) oder Polykondensation (z. B. Polycarbonate und Polyarylate aus Bisphenolen) hergestellt werden. Sie liegen amorph ("glasartig") oder kristallin und/oder in Mischformen vor. Oberhalb der Glasübergangstemperatur (amorphe Polymere) oder der Schmelztemperatur werden diese Polymere fließfähig und können durch Extrusion oder Spritzgießen verarbeitet werden. Eine weitere wichtige Polymerklasse sind Polymere mit gummielastischen Eigenschaften (Elastomere), d. h. niedrig vernetzte Polymere mit Glasübergangstemperaturen von in der Regel höchstens 0 °C. Die für Elastomere charakteristische Vernetzung kann irreversibel über kovalente chemische Bindungen oder reversibel über rein physikalische Phänomene erfolgen. Irreversibel vernetzte Elastomere sind von überaus großer technischer und wirtschaftlicher Bedeutung. Sie werden u. a. durch Vernetzung (Vulkanisierung) von natürlichen und synthetischen Kautschuken hergestellt. Ein Großteil davon dient der Produktion von Gummiartikeln. Zu den reversibel vernetzten Elastomeren zählen beispielsweise Blockcopolymere aus Styrolmonomeren und Dienen, wobei über Letztere eine physikalische Vernetzung erfolgt. Diese verleiht den Polymeren spezielle Verarbeitungseigenschaften, wie z. B. Thermoplastizität. Elastomere mit thermoplastischen Eigenschaften (thermoplastische Elastomere, Elastoplaste, Thermoplaste) sind eine weitere wichtige Polymerklasse, die in der Regel eine Kombination der Gebrauchseigenschaften von Elastomeren und den Verarbeitungseigenschaften von Thermoplasten aufweisen. Auch thermoplastische Elastomere haben weite Verbreitung gefunden und dienen beispielsweise zur Herstellung von Dichtungen, Federungssystemen, Schläuchen etc. Eine besonders wichtige Gruppe der thermoplastischen Elastomere sind die Polystyrole, die zur Modifizierung der Eigenschaften, beispielsweise zur Verbesserung der Schlagzähigkeit, in Form von Copolymeren oder Blends eingesetzt werden können.

Schwierigkeiten bereitet oft die Bereitstellung von Produkten auf Polymerbasis mit einem komplexen Eigenschaftsprofil. Es besteht ein großer Bedarf an Polymeren, die hohe Bruch- und Abriebfestigkeit sowie gute Haftung an Grenzflächen und einfache Verarbeitkeit mit hoher (Form)beständigkeit verbinden. Je nach Anwendung der Polymere wird dabei insbesondere ein bestimmtes Grenzflächenverhalten verlangt. Dabei versteht man unter Grenzflächen (Phasengrenzflächen) im Allgemeinen Flächen, die zwei nicht mischbare Phasen voneinander trennen (Gas-flüssig, Gas-fest, flüssig-fest, flüssig-flüssig, fest-fest). Dazu zählen z. B. Anwendungen, bei denen Kleb-, Haft- oder Dichtwirkung, Flexibilität, Kratz- oder Bruchfestigkeit etc. in Kombination beispielsweise mit thermoplastischem Verhalten gefordert wird. Zu den Marktprodukten mit hohen Anforderungen an das Eigenschaftsprofil der darin eingesetzten Polymere zählen beispielsweise Haftmittel, Haftvermittler, Dichtungsmassen (Dichtstoffe), Klebstoffe, technische Gummiprodukte, Präpolymere zur Vulkanisation, technische Kunststoffe zur Herstellung von Gehäusen, Griffen, Werkzeugen oder anderen technischen Hilfsmitteln.

Es ist bekannt, zur Erzielung bestimmter Produkteigenschaften Polymerzusammensetzungen einzusetzen, die zwei oder mehrere Polymere aufweisen. Ein bei solchen Zusammensetzungen häufig beobachtetes Problem ist eine Unverträglichkeit der zur Erzielung bestimmter Eigenschaften gemeinsam formulierten Polymere. Diese kann sich beispielsweise durch teilweises Entmischen und sogenanntes "Ausschwitzen" einer Komponente äußern. Es besteht ein ständiger Bedarf an Polymerzusammensetzungen, die einerseits die gewünschten Eigenschaften aufweisen und andererseits ausreichend stabil gegen Entmischungsphänomene sind.

Die WO-A-01/10969 beschreibt die Verwendung von linearen oder sternförmigen Blockcopolymeren, die wenigstens einen Polymerblock aufweisen, der im Wesentlichen aus Isobuten-Einheiten aufgebaut ist und wenigstens zwei Polymerblöcke aufweisen, die im Wesentlichen aus Einheiten aufgebaut sind, die sich von vinylaromatischen Monomeren ableiten, als elastisches Dichtungsmaterial.

Die DE-A-19 20 187 beschreibt Hochtemperatur-Detergenzien, wobei es sich um Salze der Benzoesäure, Benzolsulfonsäure, des Phenols oder Thiophenols handelt. Dabei weist der Benzolring einen weiteren Substituenten auf, der sich von Succinimid oder Phthalimid ableitet. Dabei können die Succinimidreste als Substituenten u. a. auch Polyisobutenylgruppen aufweisen.

Die EP-A-0 849 282 beschreibt polymere multifunktionelle Schmierstoffadditive. Zu deren Herstellung wird ein mehrfach ungesättigtes Polymer mit mindestens einer enophilen Verbindung, die ausgewählt ist unter Dihydrocarbylphosphorsäuren, Dihydrocarbyldithiophosphorsäuren, Dihydrocarbylmonothiophosphorsäuren und Mercaptanen umgesetzt. Bei den ungesättigten Polymeren handelt es sich um Verbindungen, welche unter Verwendung von Monomeren mit zwei oder mehr ethylenisch ungesättigten Doppelbindungen hergestellt werden. Polymerzusammensetzungen, die wenigstens eine polyisobutenhaltige Komponente enthalten sowie funktionalisierte Polyisobutenderivate sind in diesem Dokument nicht beschrieben.

Die WO 01/27127 beschreibt ein Verfahren zur kontinuierlichen Herstellung von Polyisobuten mit einem zahlenmittleren Molekulargewicht Mₙ im Bereich von 500 bis 50000 und einem Gehalt an endständigen Doppelbindungen von wenigstens 50 Mol-%.

Die WO 02/092645 beschreibt ein Verfahren zur Herstellung von Polyalkenylsuccinimiden, insbesondere Polyisobutenylsuccinimiden.

Der vorliegenden Erfndung liegt die Aufgabe zu Grunde, eine Polymerzusammensetzung zur Verfügung zu stellen, die gute mechanische Eigenschaften und/oder gute Grenzflächeneigenschaften aufweist, einfach verarbeitbar ist, und gegenüber einer Entmischung stabil ist.

Erfindungsgemäß wird diese Aufgabe gelöst durch eine Polymerzusammensetzung, enthaltend:
a) wenigstens eine Polyisobuten-haltige Komponente, die ausgewählt ist unter mittelmolekularem, reaktivem Polyisobuten mit einem zahlenmittleren Molekulargewicht Mₙ im Bereich von 5000 bis 80000 Dalton und einem Gehalt an α- und/oder β-ständigen Doppelbindungen von wenigstens 50 Mol-%, Derivaten dieses mittelmolekularen, reaktiven Polyisobutens und Mischungen davon,
b) wenigstens ein von a) verschiedenes Polymer das ausgewählt ist unter:
   - Polymeren, die
      I) wenigstens eine Styrolverbindung der Formel 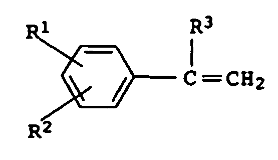 worin
         R¹ und R² unabhängig voneinander für Wasserstoff, C₁-C₃₀₋Alkyl, Hydroxy, Alkoxy oder Halogen stehen,
         R³ für Wasserstoff oder C₁-C₈-Alkyl steht, und
      II) gegebenenfalls wenigstens ein von I) verschiedenes, damit copolymerisierbares Monomer mit mindestens einer α,β-ethylenisch ungesättigten Doppelbindung,
         einpolymerisiert enthalten, und
   - Elastomeren mit einer Glasübergangstemperatur T_{G} von höchstens 0°C, ausgewählt unter
      Acrylatkautschuken (ACM), chlorsulfoniertem Polyethylen (A-CSM), Copolymeren von Alkylacrylaten mit Ethylen (AEM), Polyester-Urethanen (AU), bromierten Butylkautschuken (BIIR), Polybutadien (BR), chlorierten Butylkautschuken (CIIR), chloriertem Polyethylen (CM), Epichlorhydrin (CO), Polychloropren (CR), sulfuriertem Polyethylen (CSM), Ethylenoxid-Epichlorhydrin-Copolymeren (ECO), Ethylen-Acrylnitril-Copolymeren (ENM), epoxidierten Naturkautschuken (ENR), Ethylen-Propylen-Dien-Terpolymeren (EPDM), Ethylen-Propylen-Copolymeren (EPM), Polyether-Urethanen (EU), Ethylen-Vinylacetat-Copolymeren (EVM), Fluorkautschuken (FKM), Fluorsilicon-Kautschuken (FVMQ), Propylenoxid-Allylglycidylether-Copolymeren (GPO), Isobuten-Isopren-Copolymeren (IIR), Isoprenkautschuken (IR), Nitrilkautschuken (NBR), Naturkautschuk (NR), Thioplasten (OT) und Mischungen davon.

Unter einer Polymerzusammensetzung wird im Rahmen der vorliegenden Erfindung eine Zusammensetzung verstanden, wobei es sich um eine reine Mischung im Sinne einer Ausrüstung der Komponente b) durch eine Komponente a) (compound), eine Zusammensetzung, in der die Komponenten über rein physikalische Phänomene miteinander in Wechselwirkung treten oder um eine Zusammensetzung, in der die Komponenten kovalente Bindungen ausbilden, handeln kann. Die Ausbildung kovalenter Bindungen kann dabei sowohl zwischen den Verbindungen nur einer Komponente a) oder b) als auch zwischen einer Verbindung der Komponente a) und einer Verbindung der Komponente b) erfolgen. Dies kann beispielsweise der Fall sein, wenn die Komponente a) ein reaktives Polyisobuten enthält, welches definitionsgemäß endständige Doppelbindungen aufweist. Dabei kann es beispielsweise zu einer Reaktion zwischen den Doppelbindungen des Polyisobutens oder auch zu einer zumindest teilweisen Pfropfung auf eine weitere Polyisobutenkette oder die Komponente b) kommen. Es sind jedoch auch andere Mechanismen vorstellbar. So kann ganz allgemein durch geeignete Wahl der Bedingungen (Temperatur, elektromagnetische Strahlung, Katalysatorzusatz) eine Reaktion zwischen komplementären funktionellen Gruppen wenigstens einer Verbindung der Komponente a) und wenigstens einer Verbindung der Komponente b) induziert werden. Geeignete Verbindungen der Komponenten a) und b), geeignete komplementäre funktionelle Gruppen und Reaktionsbedingungen werden im Folgenden beschrieben.

Bei der Komponente a) handelt es sich um eine Polyisobuten-haltige Komponente auf Basis mittelmolekularer, reaktiver Polyisobutene. "reaktive" Polyisobutene unterscheiden sich von den "niedrigreaktiven" Polyisobutenen durch den Gehalt an Doppelbindungen in der α- oder β-Position. Vorzugsweise umfasst die Komponente a) wenigstens ein Polyisobuten mit einem Anteil an endständigen Doppelbindungen von mindestens 60 Mol-% und speziell mindestens 80 Mol-% und/oder ein Derivat davon.

Die erfindungsgemäß eingesetzten mittelmolekularen Polyisobutene weisen ein zahlenmittleres Molekulargewicht Mₙ im Bereich von etwa 5000 bis 80000 Dalton, vorzugsweise 10000 bis 50000 Dalton und speziell 20000 bis 40000 Dalton auf. Sie unterscheiden sich darin von niedermolekularen Polyisobutenen mit Molekulargewichten von weniger als 5000 Dalton und hochmolekularen Polyisobutenen mit Molekulargewichten bis zu mehreren 100000 Dalton.

Bevorzugt weisen die erfindungsgemäß eingesetzten Polyisobutene eine enge Molekulargewichtsverteilung auf. Bevorzugt liegt ihre Dispersizität (M_{w}/Mₙ) in einem Bereich von 1,05 bis 4, wie beispielsweise 2 bis 3. Sie kann gewünschtenfalls aber auch höher liegen, wie z. B. größer als 5 oder sogar größer als 12.

Vorzugsweise handelt es sich bei den erfindungsgemäß eingesetzten Polyiaobutenen um im Wesentlichen homopolymere Polyisobutene.

Unter einem im Wesentlichen homopolymeren Polyisobuten wird im Rahmen dieser Erfindung ein Polyisobuten verstanden, das zu mehr als 90 Gew.-% aus Isobuteneinheiten besteht. Geeignete Comonomere sind C₃-C₆-Alkene, bevorzugt n-Buten. Herstellung und Struktur der oligo-/Polyisobutene sind dem Fachmann bekannt (z. B. Günther, Maenz, Stadermann in Ang. Makrom. Chem. 234, 71 (1996)).

Vorzugsweise werden Polyisobutene eingesetzt, welche gewünschtenfalls als Comonomer bis zu 10 % n-Buten eingebaut enthalten können. Derartige Polyisobutene werden z. B. aus butadienfreien C₄-Schnitten hergestellt, welche in der Regel produktionsbedingt neben Isobuten auch n-Buten enthalten. Besonders bevorzugt sind Isobuten-Homopolymere.

Besonders geeignete reaktive Polyisobutene sind z. B. die Oppanol® -Marken der BASF Aktiengesellschaft, wie z. B. B1O-SFN, B12-SFN, B15-SFN (zahlenmittleres Molekulargewicht Mₙ = 18000, 25000, 32000 Dalton). Besonders bevorzugt sind Polyisobutene, die zu wenigstens 60 Mol-% mit Methylvinylidengruppen (-C(-CH₃)=CH₂) und/oder Dimethylvinylgruppen (-CH=C(CH₃)₂) terminiert sind.

Geeignete mittelmolekulare, reaktive Polyisobutene und Verfahren zu ihrer Herstellung sind in der EP-A-0 807 641 beschrieben, auf die in vollem Umfang Bezug genommen wird.

Nach einer bevorzugten Ausführungsform enthalten die erfindungsgemäßen Polymerzusammensetzungen als Komponente a) wenigstens ein Polyisobutenderivat, das erhältlich ist durch Umsetzung wenigstens eines Teils der in einem mittelmolekularen, reaktiven Polyisobuten enthaltenen Doppelbindungen in einer ein- oder mehrstufigen Funktionalisierung, die ausgewählt ist unter:
i) Umsetzung mit einer Verbindung, die wenigstens eine aromatische oder heteroaromatische Gruppe aufweist in Gegenwart eines Alkylierungskatalysators unter Erhalt einer mit Polyisobuten alkylierten Verbindung,
ii) Umsetzung mit einer Peroxiverbindung unter Erhalt eines wenigstens teilweise epoxidierten Polyisobutens,
iii) Umsetzung mit einem Alken, das eine elektrophil substituierte Doppelbindung aufweist (Enophil), in einer En-Reaktion,
iv) Umsetzung mit Kohlenmonoxid und Wasserstoff in Gegenwart eines Hydroformylierungskatalysators unter Erhalt eines wenigstens teilweise hydroformylierten Polyisobutens,
v) Umsetzung mit Schwefelwasserstoff oder einem Thiol unter Erhalt eines wenigstens teilweise mit Thiogruppen funktionalisierten Polyisobutens,
vi) Umsetzung mit einem Silan in Gegenwart eines Silylierungskatalysators unter Erhalt eines wenigstens teilweise mit Silylgruppen funktionalisierten Polyisobutens,
vii) Umsetzung mit einem Halogen oder einem Halogenwasserstoff unter Erhalt eines wenigstens teilweise mit Halogengruppen funktionalisierten Polyisobutens,
viii) Umsetzung mit einem Boran und anschließende oxidative Spaltung unter Erhalt eines wenigstens teilweise hydroxylierten Polyisobutens, und
ix) Umsetzung mit SO₃ oder einer zur Freisetzung von SO₃ befähigten Verbindung unter Erhalt eines wenigstens teilweise mit Sulfonsäuregruppen funktionalisierten Polyisobutens.

### i) Alkylierung

Zur Derivatisierung kann ein mittelmolekulares, reaktives Polyisobuten mit einer Verbindung, die wenigstens eine aromatische oder heteroaromatische Gruppe aufweist, in Gegenwart eines Alkylierungskatalysators umgesetzt werden. Geeignete aromatische und heteroaromatische Verbindungen, Katalysatoren und Reaktionsbedingungen dieser sogenannten Friedel-Crafts-Alkylierung sind beispielsweise in J. March, Advanced Organic Chemistry, 4. Auflage, Verlag John Wiley & Sons, S. 534-539 beschrieben, worauf hier Bezug genommen wird.

Vorzugsweise wird zur Alkylierung eine aktivierte aromatische Verbindung eingesetzt. Geeignete aromatische Verbindungen sind beispielsweise Alkoxyaromaten, Hydroxyaromaten oder aktivierte Heteroaromaten, wie Thiophene.

Die zur Alkylierung eingesetzte aromatische Hydroxyverbindung ist vorzugsweise ausgewählt unter phenolischen Verbindungen mit 1, 2 oder 3 OH-Gruppen, die gegebenenfalls wenigstens einen weiteren Substituenten aufweisen können. Bevorzugte weitere Substituenten sind C₁-C₈-Alkylgruppen und insbesondere Methyl und Ethyl. Bevorzugt sind insbesondere Verbindungen der allgemeinen Formel, 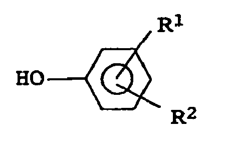 worin R¹ und R² unabhängig voneinander für Wasserstoff, OH oder CH₃ stehen. Besonders bevorzugt sind Phenol, die Kresol-Isomere, Katechol, Resorcinol, Pyrogallol, Fluoroglucinol und die Xylenol-Isomere. Insbesondere werden Phenol, o-Kresol und p-Kresol eingesetzt. Gewünschtenfalls können auch Gemische der zuvor genannten Verbindungen zur Alkylierung eingesetzt werden.

Der Katalysator ist vorzugsweise ausgewählt unter Lewis-sauren Alkylierungskatalysatoren, worunter im Rahmen der vorliegenden Anmeldung sowohl einzelne Akzeptoratome als auch Akzeptor-Ligand-Komplexe, Moleküle, etc. verstanden werden, sofern diese insgesamt (nach außen) Lewis-saure (Elektronenakzeptor-)Eigenschaften aufweisen. Dazu zählen beispielsweise AlCl₃, AlBr₃, BF₃, BF₃·2 C₆H₅OH, BF₃[O(C₂H₅)₂]₂, TiCl₄, SnCl₄, AlC₂H₅Cl₂, FeCl₃, SbCl₅ und SbF₅. Diese Alkylierungskatalysatoren können gemeinsam mit einem Cokatalysator, beispielsweise einem Ether, eingesetzt werden. Geeignete Ether sind Di-(C₁-C₈-)alkylether, wie Dimethylether, Diethylether, Di-n-propylether, sowie Tetrahydrofuran, Di-(C₅-C₈-)cycloalkylether, wie Dicyclohexylether und Ether mit mindestens einem aromatischen Kohlenwasserstoffrest, wie Anisol.

Wird zur Friedel-Crafts-Alkylierung ein Katalysator-Cokatalysator-Komplex eingesetzt, so liegt das Molmengenverhältnis von Katalysator zu Cokatalysator vorzugsweise in einem Bereich von 1:10 bis 10:1. Die Reaktion kann auch mit Protonensäuren wie Schwefelsäure, Phosphorsäure, Trifluormethansulfonsäure katalysiert werden. Organische Protonensäuren können auch in polymer gebundener Form vorliegen, beispielsweise als Ionenaustauscherharz.

Die Alkylierung kann lösungsmittelfrei oder in einem Lösungsmittel durchgeführt werden. Geeignete Lösungsmittel sind beispielsweise n-Alkane und deren Gemische und Alkylaromaten, wie Toluol, Ethylbenzol und Xylol sowie halogenierte Abkömmlinge davon.

Die Alkylierung wird bevorzugt bei Temperaturen zwischen -10 °C und +100 °C durchgeführt. Die Reaktion wird üblicherweise bei Atmosphärendruck durchgeführt, kann aber auch bei höheren oder geringeren Drücken durchgeführt werden.

Durch geeignete Wahl der Molmengenverhältnisse von aromatischer oder heteroaromatischer Verbindung zu Polyisobuten und des Katalysators kann der erzielte Anteil an alkylierten Produkten und deren Alkylierungsgrad eingestellt werden. Im Wesentlichen monoalkylierte Polyisobutenylphenole werden im Allgemeinen mit einem Überschuss an Phenol oder in Gegenwart eines Lewis-sauren Alkylierungskatalysators erhalten, wenn zusätzlich ein Ether als Cokatalysator eingesetzt wird.

Zur weiteren Funktionalisierung kann man ein in Schritt i) erhaltenes Polyisobutenylphenol einer Umsetzung im Sinne einer Mannichreaktion mit wenigstens einem Aldehyd, beispielsweise Formaldehyd, und wenigstens einem Amin, das wenigstens eine primäre oder sekundäre Aminfunktion aufweist, unterziehen, wobei man eine mit Polyisobuten alkylierte und zusätzlich wenigstens teilweise aminoalkylierte Verbindung erhält. Es können auch Reaktions- und/oder Kondensationsprodukte von Aldehyd und/oder Amin eingesetzt werden. Die Herstellung solcher Verbindungen sind in WO 01/25 293 und WO 01/25 294 beschrieben, auf die hiermit im vollen Umfang Bezug genommen wird.

### ii) Epoxidierung

Zur Funktionalisierung kann ein mittelmolekulares, reaktives Polyisobuten mit wenigstens einer Peroxiverbindung unter Erhalt eines wenigstens teilweise epoxidierten Polyisobutens umgesetzt werden. Geeignete Verfahren zur Epoxidierung sind in J. March, Advanced Organic Chemistry, 4. Auflage, Verlag John Wiley & Sons, S. 826-829 beschrieben, worauf hier Bezug genommen wird. Vorzugsweise wird als Peroxiverbindung wenigstens eine Persäure, wie m-Chlorperbenzoesäure, Perameisensäure, Peressigsäure, Trifluorperessigsäure, Perbenzoesäure und 3,5-Dinitroperbenzoesäure eingesetzt. Die Herstellung der Persäuren kann in situ aus den entsprechenden Säuren und H₂O₂ gegebenenfalls in Gegenwart von Mineralsäuren erfolgen. Weitere geeignete Epoxidierungsreagenzien sind beispielsweise alkalisches Wasserstoffperoxid, molekularer Sauerstoff und Alkylperoxide, wie tert.-Butylhydroperoxid. Geeignete Lösungsmittel für die Epoxidierung sind beispielsweise übliche, nicht polare Lösungsmittel. Besonders geeignete Lösungsmittel sind Kohlenwasserstoffe wie Toluol, Xylol, Hexan oder Heptan.

### iii) En-Reaktion

Zur Funktionalisierung kann ein mittelmolekulares, reaktives Polyisobuten mit wenigstens einem Alken, das eine elektrophil-substituierte Doppelbindung aufweist, in einer En-Reaktion umgesetzt werden (siehe z. B. DE-A 4 319 672 oder H. Mach und P. Rath in "Lubrication Science II (1999), S. 175-185, worauf voll inhaltlich Bezug genommen wird). Bei der En-Reaktion wird ein als En bezeichnetes Alken mit einem Allyl-ständigen Wasserstoffatom mit einem elektrophilen Alken, dem sogenannten Enophil, in einer pericyclischen Reaktion, umfassend eine Kohlenstoff-Kohlenstoff-Bindungsknüpfung, eine Doppelbindungsverschiebung und einen Wasserstofftransfer umgesetzt. Vorliegend reagiert das mittelmolekulare, reaktive Polyisobuten als En. Geeignete Enophile sind Verbindungen, wie sie auch als Dienophile in der Diels-Alder-Reaktion eingesetzt werden. Bevorzugt wird als Enophil Maleinsäureanhydrid eingesetzt. Dabei resultieren wenigstens teilweise mit Bernsteinsäureanhydridgruppen (Succinanhydridgruppen) funktionalisierte Polyisobutene.

Die En-Reaktion kann gegebenenfalls in Gegenwart einer LewisSäure als Katalysator durchgeführt werden. Geeignet sind beispielsweise Aluminiumchlorid und Ethylaluminiumchlorid.

Zur weiteren Funktionalisierung kann man beispielsweise ein mit Bernsteinsäureanhydridgruppen derivatisiertes Polyisobuten einer Folgereaktion unterziehen, die ausgewählt ist unter:
α) Umsetzung mit wenigstens einem Amin unter Erhalt eines wenigstens teilweise mit Succinimidgruppen und/oder Succinamidgruppen funktionalisierten Polyisobutens,
β) Umsetzung mit wenigstens einem Alkohol unter Erhalt eines wenigstens teilweise mit Succinestergruppen funktionalisierten Polyisobutens, und
γ) Umsetzung mit wenigstens einem Thiol unter Erhalt eines wenigstens teilweise mit Succinthioestergruppen funktionalisierten Polyisobutens.

### iv) Hydroformylierung

Zur Funktionalisierung kann man ein mittelmolekulares, reaktives Polyisobuten einer Umsetzung mit Kohlenmonoxid und Wasserstoff in Gegenwart eines Hydroformylierungskatalysators unterziehen, wobei ein wenigstens teilweise hydroformyliertes Polyisobuten erhalten wird.

Geeignete Katalysatoren für die Hydroformylierung sind bekannt und umfassen vorzugsweise eine Verbindung oder einen Komplex eines Elements der VIII. Nebengruppe des Periodensystems, wie Co, Rh, Ir, Ru, Pd oder Pt. Zur Aktivitäts- und/oder Selektivitätsbeeinflussung werden vorzugsweise mit N- oder P-haltigen Liganden modifizierte Hydroformylierungskatalysatoren eingesetzt. Geeignete Salze dieser Metalle sind beispielsweise die Hydride, Halogenide, Nitrate, Sulfate, Oxide, Sulfide oder die Salze mit Alkyl- oder Arylcarbonsäuren oder Alkyl- oder Arylsulfonsäuren. Geeignete Komplexverbindungen weisen Liganden auf, die beispielsweise ausgewählt sind unter Halogeniden, Aminen, Carboxylaten, Acetylacetonat, Aryl- oder Alkylsulfonaten, Hydrid, CO, Olefinen, Dienen, Cycloolefinen, Nitrilen, N-haltigen Heterocyclen, Aromaten und Heteroaromaten, Ethern, PF₃, Phospholen, Phosphabenzolen sowie ein-, zwei- und mehrzähnigen Phosphin-, Phosphinit-, Phosphonit-, Phosphoramidit und Phosphitliganden.

Im Allgemeinen werden unter Hydroformylierungsbedingungen aus den jeweils eingesetzten Katalysatoren oder Katalysatorvorstufen katalytisch aktive Spezies der allgemeinen Formel HₓM_{y}(CO)_{z}L_{q} gebildet, worin M für ein Metall der VIII. Nebengruppe, L für einen Liganden und q, x, y, z für ganze Zahlen, abhängig von der Wertigkeit und Art des Metalls sowie der Bindigkeit des Liganden L, stehen.

Nach einer bevorzugten Ausführungsform werden die Hydroformylierungskatalysatoren in situ in dem für die Hydroformylierungsreaktion eingesetzten Reaktor hergestellt.

Eine andere bevorzugte Form ist die Verwendung eines Carbonylgenerators, bei dem vorgefertigtes Carbonyl z. B. an Aktivkohle adsorbiert wird und nur das desorbierte Carbonyl der Hydroformylierung zugeführt wird, nicht aber die Salzlösungen, aus denen das Carbonyl erzeugt wird.

Geeignete Rhodiumverbindungen oder -komplexe sind z. B. Rhodium(II)- und Rhodium(III)-salze, wie Rhodium(III)-chlorid, Rhodium(III)-nitrat, Rhodium(III)-sulfat, Kalium-Rhodiumsulfat, Rhodium(II)- bzw. Rhodium(III)-carboxylat, Rhodium(II)- und Rhodium(III)-acetat, Rhodium(III)-oxid, Salze der Rhodium(III)-säure, Trisammoniumhexachlororhodat(III) etc. Weiterhin eignen sich Rhodiumkomplexe, wie Rhodiumbiscarbonylacetylacetonat, Acetylacetonatobisethylenrhodium(I) etc.

Ebenfalls geeignet sind Rutheniumsalze oder -verbindungen. Geeignete Rutheniumsalze sind beispielsweise Ruthenium(III)chlorid, Ruthenium(IV)-, Ruthenium(VI)- oder Ruthenium(VIII)oxid, Alkalisalze der Rutheniumsauerstoffsäuren wie K₂RuO₄ oder KRuO₄ oder Komplexverbindungen, wie z. B. RuHCl(CO)(PPh₃)₃. Auch können die Metallcarbonyle des Rutheniums wie Trisrutheniumdodecacarbonyl oder Hexarutheniumoctadecacarbonyl, oder Mischformen, in denen CO teilweise durch Liganden der Formel PR₃ ersetzt sind, wie Ru(CO)₃(PPh₃)₂, verwendet werden.

Geeignete Cobaltverbindungen sind beispielsweise Cobalt(II)chlorid, Cobalt(II)sulfat, Cobalt(II)carbonat, Cobalt(II)nitrat, deren Amin- oder Hydratkomplexe, Cobaltcarboxylate, wie Cobaltformiat, Cobaltacetat, cobaltethylhexanoat, Cobaltnaphthanoat, sowie der Cobalt-Caprolactamat-Komplex. Auch hier können die Carbonylkomplexe des Cobalts wie Dicobaltoctacarbonyl, Tetracobaltdodecacarbonyl und Hexacobalthexadecacarbonyl eingesetzt werden.

Die genannten und weitere geeignete Verbindungen sind im Prinzip bekannt und in der Literatur hinreichend beschrieben.

Geeignete Aktivierungsmittel, die zur Hydroformylierung eingesetzt werden können, sind z. B. Brönsted-Säuren, Lewis-Säuren, wie z. B. BF₃, AlCl₃, ZnCl₂, und Lewis-Basen.

Die Zusammensetzung des eingesetzten Synthesegases aus Kohlenmonoxid und Wasserstoff kann in weiten Bereichen variieren. Das molare Verhältnis von Kohlenmonoxid und Wasserstoff beträgt in der Regel etwa 5:95 bis 95:5, bevorzugt etwa 40:60 bis 60:40. Die Temperatur bei der Hydroformylierung liegt im Allgemeinen in einem Bereich von etwa 20 bis 200 °C, bevorzugt etwa 50 bis 190 °C. Die Reaktion wird in der Regel bei dem Partialdruck des Reaktionsgases bei der gewählten Reaktionstemperatur durchgeführt. Im Allgemeinen liegt der Druck in einem Bereich von etwa 1 bis 700 bar, bevorzugt 1 bis 300 bar.

Die Carbonylzahl der erhaltenen hydroformylierten Polyisobutene hängt vom zahlenmittleren Molekulargewicht Mₙ ab. Vorzugsweise weisen Produkte mit einem zahlenmittleren Molekulargewicht Mₙ von 10000 Dalton Carbonylzahlen von 2 bis 5,6 mg KOH/g, insbesondere 3,6 bis 5,6 mg KOH/g auf. Produkte mit einem zahlenmittleren Molekulargewicht Mₙ von 40000 Dalton weisen Carbonylzahlen von 0,5 bis 1,4 mg KOH/g, insbesondere 0,9 bis 1,4 mg KOH/g auf. Die Carbonylzahlen für Produkte mit anderen Molekulargewichten lassen sich durch Inter- oder Extrapolation bestimmen.

Vorzugsweise wird der überwiegende Teil der in dem eingesetzten mittelmolekularen, reaktiven Polyisobuten enthaltenen Doppelbindungen durch die Hydroformylierung in Aldehyde überführt. Durch Einsatz geeigneter Hydroformylierungskatalysatoren und/oder eines Überschusses an Wasserstoff im eingesetzten Synthesegas kann der überwiegende Teil der im Edukt enthaltenen, ethylenisch ungesättigten Doppelbindungen auch direkt in Alkohole umgewandelt werden. Dies kann auch in einer zweistufigen Funktionalisierung gemäß dem im Folgenden beschriebenen Reaktionsschritt B) erfolgen.

Die durch Hydroformylierung erhaltenen funktionalisierten Polyisobutene eignen sich vorteilhaft als Zwischenprodukte für die Weiterverarbeitung durch Funktionalisierung wenigstens eines Teils der in ihnen enthaltenen Aldehydfunktionen.

### A) Oxocarbonsäuren

Zur weiteren Funktionalisierung kann man die in Schritt iv) erhaltenen hydroformylierten Polyisobutene mit einem Oxidationsmittel unter Erhalt eines wenigstens teilweise mit Carboxygruppen funktionalisierten Polyisobutens umsetzen.

Für die Oxidation von Aldehyden zu Carbonsäuren können allgemein eine große Anzahl verschiedener Oxidationsmittel und -verfahren verwendet werden, die z. B. in J. March, Advanced Organic Chemistry, Verlag John Wiley & Sons, 4. Auflage, S. 701ff. (1992) beschrieben sind. Dazu zählen z. B. die Oxidation mit Permanganat, Chromat, Luftsauerstoff, etc. Die Oxidation mit Luft kann sowohl katalytisch in Gegenwart von Metallsalzen als auch in Abwesenheit von Katalysatoren erfolgen. Als Metalle werden bevorzugt solche verwendet, die zu einem Wertigkeitswechsel befähigt sind, wie z. B. Cu, Fe, Co, Mn, etc. Die Reaktion gelingt in der Regel auch in Abwesenheit eines Katalysators. Bei der Luftoxidation kann der Umsatz leicht über die Reaktionsdauer gesteuert werden.

Nach einer weiteren Ausführungsform wird als Oxidationsmittel eine wässrige Wasserstoffperoxidlösung in Kombination mit einer Carbonsäure, wie z. B. Essigsäure, verwendet. Die Säurezahl der erhaltenen Polyisobutene mit Carboxylfunktion hängt vom zahlenmittleren Molekulargewicht Mₙ ab. Vorzugsweise weisen Produkte mit einem zahlenmittleren Molekulargewicht Mₙ von 10000 Dalton Säurezahlen von 2 bis 5,6 mg KOH/g, insbesondere 3,6 bis 5,6 mg KOH/g auf. Produkte mit einem zahlenmittleren Molekulargewicht Mₙ von 40000 Dalton weisen Säurezahlen von 0,5 bis 1,4 mg KOH/g, insbesondere 0,9 bis 1,4 mg KOH/g auf. Die Säurezahlen für Produkte mit anderen Molekulargewichten lassen sich durch Inter- oder Extrapolation bestimmen.

### B) Oxoalkohole

Nach einer weiteren geeigneten Ausführungsform können die in Schritt iv) erhaltenen hydroformylierten Polyisobutene einer Umsetzung mit Wasserstoff in Gegenwart eines Hydrierkatalysators unter Erhalt eines wenigstens teilweise mit Alkoholgruppen funktionalisierten Polyisobutens unterzogen werden.

Geeignete Hydrierungskatalysatoren sind im allgemeinen Übergangsmetalle wie z. B. Cr, Mo, W, Fe, Rh, Co, Ni, Pd, Pt, Ru, etc., oder deren Mischungen, die zur Erhöhung der Aktivität und Stabilität auf Trägern, wie z. B. Aktivkohle, Aluminiumoxid, Kieselgur, etc., aufgebracht werden können. Zur Erhöhung der katalytischen Aktivität können Fe, Co, und bevorzugt Ni auch in Form der Raney-Katalysatoren als Metallschwamm mit einer sehr großen Oberfläche verwendet werden.

Die Hydrierung der Oxo-Aldehyde aus Stufe iv) erfolgt in Abhängigkeit von der Aktivität des Katalysators vorzugsweise bei erhöhten Temperaturen und erhöhtem Druck. Bevorzugt liegt die Reaktionstemperatur bei etwa 80 bis 150 °C und der Druck bei etwa 50 bis 350 bar.

Die Alkoholzahl der erhaltenen Polyisobutene mit Hydroxygruppen hängt vom zahlenmittleren Molekulargewicht Mₙ ab. Vorzugsweise weisen Produkte mit einem zahlenmittleren Molekulargewicht Mₙ von 10000 Dalton Alkoholzahlen von 2 bis 5,6 mg KOH/g, insbesondere 3,6 bis 5,6 mg KOH/g auf. Produkte mit einem zahlenmittleren Molekulargewicht Mₙ von 40000 Dalton weisen Alkoholzahlen von 0,5 bis 1,4 mg KOH/g, insbesondere 0,9 bis 1,4 mg KOH/g auf. Die Alkoholzahlen für Produkte mit anderen Molekulargewichten lassen sich durch Inter- oder Extrapolation bestimmen.

### C) Aminsynthese

Nach einer weiteren geeigneten Ausführungsform werden die in Schritt iv) erhaltenen hydroformylierten Polyisobutene zur weiteren Funktionalisierung einer Umsetzung mit Wasserstoff und Ammoniak oder einem primären oder sekundären Amin in Gegenwart eines Aminierungskatalysators unter Erhalt eines wenigstens teilweise mit Amingruppen funktionalisierten Polyisobutens unterzogen.

Geeignete Aminierungskatalysatoren sind die zuvor in Stufe B) beschriebenen Hydrierungskatalysatoren, bevorzugt Kupfer, Cobalt oder Nickel, die in Form der Raney-Metalle oder auf einem Träger eingesetzt werden können. Weiter eignen sich auch Platinkatalysatoren.

Bei der Aminierung mit Ammoniak werden aminierte Polyisobutene mit primären Aminofunktionen erhalten. Zur Aminierung geeignete primäre und sekundäre Amine sind Verbindungen der allgemeinen Formeln R-NH₂ und RR'NH, worin R und R' beispielsweise für C₁-C₁₀-Alkyl, C₆-C₂₀-Aryl, C₇-C₂₀-Arylalkyl, C₇-C₂₀-Alkylaryl oder Cycloalkyl stehen.

Die Aminzahl der erhaltenen Polyisobutene mit Aminofunktion hängt vom zahlenmittleren Molekulargewicht Mₙ ab. Vorzugsweise weisen Produkte mit einem zahlenmittleren Molekulargewicht Mₙ von 10000 Dalton Aminzahlen von 2 bis 5,6 mg KOH/g, insbesondere 3,6 bis 5,6 mg KOH/g auf. Produkte mit einem zahlenmittleren Molekulargewicht Mₙ von 40000 Dalton weisen Aminzahlen von 0,5 bis 1,4 mg KOH/g, insbesondere 0,9 bis 1,4 mg KOH/g auf. Die Aminzahlen für Produkte mit anderen Molekulargewichten lassen sich durch Inter- oder Extrapolation bestimmen.

### v) Addition von Schwefelwasserstoff und Thiolen

Zur Funktionalisierung kann ein mittelmolekulares, reaktives Polyisobuten einer Umsetzung mit Schwefelwasserstoff oder einem Thiol, wie Alkyl- oder Arylthiole, Hydroxymercaptane, Aminomercaptane, Thiocarbonsäuren oder Silanthiole, unter Erhalt eines wenigstens teilweise mit Thiogruppen funktionalisierten Polyisobutens unterzogen werden. Geeignete Hydro-Alkylthio-Additionen sind in J. March, Advanced Organic Chemistry, 4. Auflage, Verlag John Wiley & Sons, S. 766-767 beschrieben, worauf hier in vollem Umfang Bezug genommen wird. Die Umsetzung kann in der Regel sowohl in Abwesenheit als auch in Anwesenheit von Initiatoren sowie in Anwesenheit von elektromagnetischer Strahlung erfolgen. Bei der Addition von Schwefelwasserstoff werden mit Thiolgruppen funktionalisierte Polyisobutene erhalten. Bei der Umsetzung mit Thiolen in Abwesenheit von Initiatoren werden in der Regel die Markovnikov-Additionsprodukte an die Doppelbindung erhalten. Geeignete Initiatoren der Hydro-Alkylthio-Addition sind beispielsweise Protonen- und Lewis-Säuren, wie konzentrierte Schwefelsäure oder AlCl₃. Geeignete Initiatoren sind weiterhin solche, die zur Ausbildung von freien Radikalen befähigt sind. Bei der Hydro-Alkylthio-Addition in Gegenwart dieser Initiatoren werden in der Regel die Anti-Markovnikov-Additionsprodukte erhalten. Die Reaktion kann weiterhin in Gegenwart von elektromagnetischer Strahlung einer Wellenlänge von 400 bis 10 nm, bevorzugt 200 bis 300 nm, erfolgen.

### vi) Silylierung

Zur Funktionalisierung kann ein mittelmolekulares, reaktives Polyisobuten einer Umsetzung mit einem Silan in Gegenwart eines Silylierungskatalysators unter Erhalt eines wenigstens teilweise mit Silylgruppen funktionalisierten Polyisobutens unterzogen werden.

Geeignete Hydrosilylierungskatalysatoren sind z. B. Übergangsmetallkatalysatoren, wobei das Übergangsmetall vorzugsweise ausgewählt ist unter Pt, Pd, Rh, Ru und Ir. Zu den geeigneten Platinkatalysatoren zählt beispielsweise Platin in feinverteilter Form ("Platinmohr"), Platinchlorid und Platinkomplexe wie Hexachloroplatinsäure. Geeignete Rhodiumkatalysatoren sind beispielsweise (RhCl(P(C₆H₅)₃)₃) und RhCl₃. Geeignet sind weiterhin RuCl₃ und IrCl₃. Geeignete Katalysatoren sind weiterhin Lewis-Säuren wie AlCl₃ oder TiCl₄ sowie Peroxide. Dabei kann es von Vorteil sein, Kombinationen oder Gemische der zuvor genannten Katalysatoren einzusetzen.

Geeignete Silane sind z. B. halogenierte Silane, wie Trichlorsilan, Methyldichlorsilan, Dimethylchlorsilan und Trimethylsiloxydichlorsilan; Alkoxysilane, wie Trimethoxysilan, Trimethoxysilan, Methyldimethoxysilan, Phenyldimethoxysilan, 1,3,3,5,5,7,7-Heptamethyl-1,1-dimethoxytetrasiloxan sowie Acyloxysilane.

Die Reaktionstemperatur bei der Silylierung liegt vorzugsweise in einem Bereich von 0 bis 120 °C, besonders bevorzugt 40 bis 100 °C. Die Reaktion wird üblicherweise unter Normaldruck durchgeführt, kann jedoch auch bei erhöhten Drücken, wie z. B. im Bereich von etwa 1,5 bis 20 bar, oder verringerten Drücken, wie z. B. 200 bis 600 mbar, erfolgen.

Die Reaktion kann ohne Lösungsmittel oder in Gegenwart eines geeigneten Lösungsmittels erfolgen. Als Lösungsmittel bevorzugt sind beispielsweise Toluol, Tetrahydrofuran und Chloroform.

### vii) Addition von Halogenwasserstoff oder Halogen

Zur Funktionalisierung kann ein mittelmolekulares, reaktives Polyisobuten einer Umsetzung mit Halogenwasserstoff oder einem Halogen unter Erhalt eines wenigstens teilweise mit Halogengruppen funktionalisierten Polyisobutens unterzogen werden. Geeignete Reaktionsbedingungen der Hydro-Halo-Addition werden in J. March, Advanced Organic Chemistry, 4. Auflage, Verlag John Wiley & Sons, S. 758-759 beschrieben, worauf hier Bezug genommen wird. Zur Addition von Halogenwasserstoff eignen sich prinzipiell HF, HCl, HBr und HI. Die Addition von HI, HBr und HF kann in der Regel bei Raumtemperatur erfolgen, wohingegen zur Addition von HCl in der Regel erhöhte Temperaturen eingesetzt werden.

Die Addition von Halogenwasserstoffen kann prinzipiell in Abwesenheit oder in Anwesenheit von Initiatoren oder von elektromagnetischer Strahlung erfolgen. Bei der Addition in Abwesenheit von Initiatoren, speziell von Peroxiden, werden in der Regel die Markovnikov-Additionsprodukte erhalten. Unter Zusatz von Peroxiden führt die Addition von HBr in der Regel zu Anti-Markovnikov-Produkten.

Die Halogenierung von Doppelbindungen wird in J. March, Advanced Organic Chemistry, 4. Auflage, Verlag John Wiley & Sons, S. 812-814 beschrieben, worauf hier Bezug genommen wird. Zur Addition von Cl, Br und I können die freien Halogene eingesetzt werden. Zum Erhalt von gemischt-halogenierten Verbindungen ist der Einsatz von Interhalogen-Verbindungen bekannt. Zur Addition von Fluor werden in der Regel Fluor-haltige Verbindungen, wie Co, F₃, XeF₂ und Mischungen von PbO₂ und SF₄ eingesetzt. Brom addiert in der Regel bei Raumtemperatur in guten Ausbeuten an Doppelbindungen. Zur Addition von Chlor können neben dem freien Halogen auch Chlor-haltige Reagenzien, wie SO₂Cl₂, PCl₅ etc. eingesetzt werden.

Wird zur Halogenierung Chlor oder Brom in Gegenwart von elektromagnetischer Strahlung eingesetzt, so erhält man im Wesentlichen die Produkte der radikalischen Substitution an der Polymerkette und nicht oder nur in untergeordnetem Maß Additionsprodukte an die endständige Doppelbindung.

### viii) Hydroborierung

Zur Funktionalisierung kann man ein mittelmolekulares, reaktives Polyisobuten einer Umsetzung mit einem (gegebenenfalls in situ erzeugten) Boran unterziehen, wobei ein wenigstens teilweise hydroxyliertes Polyisobuten erhalten wird. Geeignete Verfahren zur Hydroborierung sind in J. March, Advanced Organic Chemistry, 4. Auflage, Verlag John Wiley & Sons, S. 783-789 beschrieben, worauf hiermit Bezug genommen wird. Geeignete Hydroborierungsreagenzien sind beispielsweise Diboran, das in der Regel in situ durch Umsetzung von Natriumborhydrid mit BF₃-Etherat erzeugt wird, Diisamylboran (Bis-[3-methylbut-2-yl]boran), 1,1,2-Trimethylpropylboran, 9-Borbicyclo[3.3.1]nonan, Diisocampheylboran, die durch Hydroborierung der entsprechenden Alkene mit Diboran erhältlich sind, Chlorboran-Dimethylsulfid, Alkyldichlorborane oder H₃B-N(C₂H₅)₂.

Üblicherweise führt man die Hydroborierung in einem Lösungsmittel durch. Geeignete Lösungsmittel für die Hydroborierung sind beispielsweise acyclische Ether wie Diethylether, Methyl-tert.-butylether, Dimethoxyethan, Diethylenglykoldimethylether, Triethylenglykoldimethylether, cyclische Ether wie Tetrahydrofuran oder Dioxan sowie Kohlenwasserstoffe wie Hexan oder Toluol oder Gemische davon. Die Reaktionstemperatur wird in der Regel von der Reaktivität des Hydroborierungsmittels bestimmt und liegt normalerweise zwischen dem Schmelz- und Siedepunkt des Reaktionsgemisches, vorzugsweise im Bereich von 0 °C bis 60 °C.

Üblicherweise setzt man das Hydroborierungsmittel im Überschuss bezogen auf das Alken ein. Das Boratom addiert sich vorzugsweise an das weniger substituierte und somit sterisch weniger gehinderte Kohlenstoffatom.

Üblicherweise werden die gebildeten Alkylborane nicht isoliert, sondern durch nachfolgende Umsetzung direkt in die Wertprodukte überführt. Eine sehr bedeutsame Umsetzung der Alkylborane ist die Reaktion mit alkalischen Wasserstoffperoxid unter Erhalt eines Alkohols, der vorzugsweise formal der anti-Markovnikov-Hydratisierung des Alkens entspricht. Des Weiteren können die erhaltenen Alkylborane einer Umsetzung mit Brom in Gegenwart von Hydroxid-Ionen unter Erhalt des Bromids unterzogen werden.

### ix) Sulfonierung

Zur Funktionalisierung kann man ein mittelmolekulares, reaktives Polyisobuten auch sulfonieren. Geeignete Verfahren zur Sulfonierung sind dem Fachmann bekannt und werden beispielsweise von Storey und Lee (J. Polym. Sci. A, 29, 317-325 (1991)), Kennedy und Storey (ACS Org. Coat. Appl. Polym. Sci. Proc. 46, 182 (1982)), von Bagrodia, Wilkes, Kennedy (J. Appl. Polym. Sci. 30, 2179-93 (1985)) und in der WO 01/70830 beschrieben, worauf hier in vollem umfang Bezug genommen wird.

Geeignete Sulfonierungsmittel sind z. B. SO₃, SO₃-Addukte, wie Pyridin-SO₃ oder Dioxan-SO₃, oder Verbindungen, wie Acetylsulfat, welche SO₃ freisetzen können. Das Acetylsulfat kann dabei auch in situ aus Schwefelsäure und Acetanhydrid hergestellt werden.

Je nach gewünschtem Sulfonierungsgrad kann das Sulfonierungsreagenz im Über- oder Unterschuss eingesetzt werden, z. B. im Bereich von 1:0,7 bis 1:4 (Mol Olefin:Mol Reagenz). Bevorzugt ist ein Bereich von 1:0,9 bis 1:2,5.

Die Reaktionstemperatur liegt bei -30 bis 150 °C, bevorzugt bei 0 bis 100 °C. Die Reaktion wird üblicherweise unter Normaldruck durchgeführt, jedoch kann ein höherer (z. B. 1, 5 oder 20 bar) oder niedriger Druck (z. B. 200 oder 600 mbar) vorteilhaft sein.

Die Reaktion kann ohne Lösungsmittel oder bevorzugt in einem unter Reaktionsbedingungen inerten organischen Lösungsmittel, z. B. in aliphatischen Kohlenwasserstoffen, wie Pentan, Hexan oder Heptan sowie Kohlenwasserstoffgemischen durchgeführt werden.

Die bei der Sulfonierung erhaltenen, wenigstens teilweise mit Sulfonsäuregruppen funktionalisierten Polyisobutene können durch Umsetzung mit einer Base zumindest teilweise in Salze überführt werden. Geeignete Basen sind beispielsweise Alkali-, Erdalkali- oder Erdmetalle sowie deren Oxide, Hydroxide, Carbonate und Hydrogencarbonate, z. B. Li, Na, K, Ca, Mg, Al, Li₂CO₃, Na₂CO₃, K₂CO₃, CaCO₃, NaOH, KOH, CaO und MgO. Ebenso kann NH₃ z. B. als Lösung in Wasser oder können organische Amine zur Salzherstellung eingesetzt werden.

Die erfindungsgemäß eingesetzten mittelmolekularen, reaktiven Polyisobutene sowie ihre zuvor beschriebenen erfindungsgemäß eingesetzten Derivate eignen sich in vorteilhafter Weise zur Herstellung von Polymerzusammensetzungen mit guten Grenzflächeneigenschaften und/oder dauerhaft guten mechanischen Eigenschaften. So weisen sie enthaltende Polymerzusammensetzungen, beispielsweise eine sehr gute Kleb- oder Dichtwirkung, Haftung und/oder Flexibilität auf. Sie eignen sich weiterhin in vorteilhafter Weise zur Verbesserung der Abriebfeste und/oder Kratzfestigkeit von Polymeroberflächen. Des Weiteren sind mittelmolekulare, reaktive Polyisobutene und ihre Derivate gut verträglich mit einer großen Anzahl von Polymeren. Dies kann sowohl aus einer Befähigung zu einer physikalischen Wechselwirkung mit diesen Polymeren als auch aus einer Befähigung zur Ausbildung von koyalenten Bindungen herrühren. Vorteilhafterweise zeigen die erfindungsgemäßen Polymerzusammensetzungen somit eine nur sehr geringe Neigung zu Entmischungsphänomenen, was sich beispielsweise bei aus dem Stand der Technik bekannten Polymerzusammensetzungen in einem Ausschwitzen einer der Komponenten äußert.

Nach einer bevorzugten Ausführungsform ist die Komponente b) ausgewählt unter Elastomeren mit einer Glasübergangstemperatur T_{G} von höchstens -10 °C.

Erfindungsgemäß ist das Elastomer ausgewählt unter Acrylatkautschuken (ACM), chlorsulfoniertem Polyethylen (A-CSM), Copolymeren von Alkylacrylaten mit Ethylen (AEM), Polyester-Urethanen (AU), bromierten Butylkautschuken (BIIR), Polybutadien (BR), chlorierten Butylkautschuken (CIIR), chloriertem Polyethylen (CM), Epichlorhydrin (CO), Polychloropren (CR), sulfuriertem Polyethylen (CSM), Ethylenoxid-Epichlorhydrin-Copolymeren (ECO), Ethylen-Acrylnitril-Copolymeren (ENM), epoxidierten Naturkautschuken (ENR), Ethylen-Propylen-Dien-Terpolymeren (EPDM), Ethylen-Propylen-Copolymeren (EPM), Polyether-Urethanen (EU), Ethylen-Vinylacetat-Copolymeren (EVM), Fluorkautschuken (FKM), Fluorsilicon-Kautschuken (FVMQ), Propylenoxid-Allylglycidylether-Copolymeren (GPO), Isobuten-Isopren-Copolymeren (IIR), Isoprenkautschuken (IR), Nitrilkautschuken (NBR), Naturkautschuk (NR), Thioplasten (OT) und Mischungen davon.

Bevorzugt umfasst die Komponente b) der erfindungsgemäßen Polymerzusammensetzung wenigstens eine Elastomer, das wenigstens eine aromatische und/oder heteroaromatische Gruppe aufweist. Bevorzugt enthalten diese Elastomere Styrol und/oder ein Styrolderivat in einpolymerisierter Form. Besonders bevorzugt umfasst die Komponente b) ein Styrol/Butadien-Elastomer. Diese enthalten das Butadien vorzugsweise in 1,4-Verknüpfung, wobei jedoch auch Anteile von 1,2-Verknüpfung enthalten sein können. Bevorzugt sind Styrol/Butadien-Elastomere, die einen Styrolanteil im Bereich von 10 bis 70 Gew.-%, bevorzugt 20 bis 40 Gew.-%, bezogen auf die Gesamtmenge der zu polymerisierenden Monomere, enthalten. Styrol/Butadien-Elastomere haben als Synthesekautschuk weite Verbreitung gefunden und dienen beispielsweise der Verwendung in Schuhsohlen, Förderbändern und weiteren technischen Artikeln. Die erfindungsgemäßen Polymerzusammensetzungen, enthaltend wenigstens eine Polyisobuten-haltige Komponente a) und wenigstens ein Styrol/Butadien-Elastomer b) zeichnen sich durch eine hohe Abriebfestigkeit und gute Verträglichkeit der Komponenten aus.

Desweiteren erfindungsgemäß ist die Komponente b) ausgewählt unter Polymeren, die
I) wenigstens eine Styrolverbindung der Formel 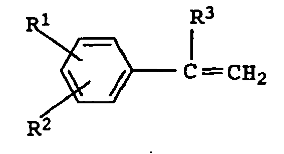 worin
   R¹ und R² unabhängig voneinander für Wasserstoff, C₁-C₃₀-Alkyl, Hydroxy, Alkoxy oder Halogen stehen,
   R³ für Wasserstoff oder C₁-C₈-Alkyl steht, und
II) gegebenenfalls wenigstens ein von I) verschiedenes, damit copolymerisierbares Monomer mit mindestens einer α,β-ethylenisch ungesättigten Doppelbindung,
einpolymerisiert enthalten.

Die Styrolverbindung ist vorzugsweise ausgewählt unter Styrol, α-Methylstyrol, o-Chlorstyrol und den isomeren Vinyltoluolen.

Vorzugsweise sind die Monomere II) ausgewählt unter Estern α,β-ethylenisch ungesättigter Mono- und/oder Dicarbonsäuren mit C₁-C₃₀-Alkanolen, Estern von Vinylalkohol oder Allylalkohol mit C₁-C₃₀-Monocarbonsäuren, Vinylethern, Vinylhalogeniden, Vinylidenhalogeniden, C₂-C₈-Monoolefinen, nicht aromatischen Kohlenwasserstoffen mit mindestens zwei konjugierten Doppelbindungen, N-Vinylamiden, N-Vinyllactamen, primären Amiden α,β-ethylenisch ungesättigter Monocarbonsäuren, Vinyl- und Allyl-substituierten heteroaromatischen Verbindungen, α,β-ethylenisch ungesättigten Nitrilen und Mischungen davon.

Bevorzugte Monomere II) sind beispielsweise Vinylformiat, Vinylacetat, Vinylpropionat, Vinyl-n-butyrat, Vinylstearat, Vinyllaurat, Vinylchlorid, Vinylidenchlorid, Ethylen, Propylen, Butadien, Isopren, Chloropren, Methyl-, Ethyl-, Butyl-, Dodecylvinylether, Methyl(meth)acrylat, Methylethacrylat, Ethyl(meth)acrylat, tert.-Butyl(meth)acrylat, n-Octyl(meth)acrylat, Ethylhexyl(meth)acrylat, N-Vinylformamid, N-Vinylacetamid, N-Vinylpropionamid, N-Vinylpyrrolidon, N-Vinylpiperidon, N-Vinylcaprolactam, Acrylamid, Methacrylamid, Ethacrylamid, 2- und 4-Vinylpyridin, -allylpyridin, N-Vinylimidazol, Acrylnitril, Methacrylnitril und Mischungen davon.

Bevorzugt ist die Komponente b), ausgewählt unter Polymeren, die
I) 50 bis 100 Gew.-%, bezogen auf das Gesamtgewicht der Komponenten I) bis III), wenigstens einer Styrolverbindung der Formel 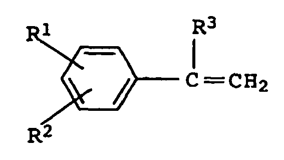 worin
   R¹, R² und R³ unabhängig voneinander für Wasserstoff oder C₁-C₈-Alkyl stehen
II) 0 bis 50 Gew.-%, bezogen auf das Gesamtgewicht der Komponenten I) bis III), wenigstens einer Verbindung, die ausgewählt ist unter Dienen mit konjugierten Doppelbindungen, Acrylnitril, Methacrylnitril und Mischungen davon und
III) 0 bis 40 Gew.-% wenigstens eines von I) und II) verschiedenen, damit copolymerisierbaren monoethylenisch ungesättigten Monomeren,
einpolymerisiert enthalten.

Die Herstellung der Polymere b) erfolgt beispielsweise durch radikalische Polymerisation nach üblichen, dem Fachmann bekannten Verfahren. Dazu zählt die radikalische Polymerisation in Masse, Emulsion, Suspension und in Lösung, vorzugsweise die Emulsions- und Lösungspolymerisation. Die Polymerisationstemperatur beträgt in der Regel 30 bis 120 °C, bevorzugt 40 bis 100 °C. Das Polymerisationsmedium für die Lösungspolymerisation kann sowohl nur aus einem organischen Lösungsmittel als auch aus Mischungen aus Wasser und mindestens einem wassermischbaren, organischen Lösungsmittel bestehen. Bevorzugte organische Lösungsmittel sind z. B. Alkohole, wie Methanol, Ethanol, n-Propanol, Isopropanol, n-Butanol, Ketone, wie Aceton und Methylethylketonen, Tetrahydrofuran etc. Die Lösungspolymerisation kann sowohl als Batchprozess als auch in Form eines Zulaufverfahrens, einschließlich Monomerenzulauf, Stufen- und Gradientenfahrweise, durchgeführt werden. Bevorzugt ist im Allgemeinen das Zulaufverfahren, bei dem man gegebenenfalls einen Teil des Polymerisationsansatzes vorlegt, auf die Polymerisationstemperatur erhitzt und anschließend den Rest des Polymerisationsansatzes, üblicherweise über einen oder auch mehrere, räumlich getrennte Zuläufe, kontinuierlich, stufenweise oder unter Überlagerung eines Konzentrationsgefälles unter Aufrechterhaltung der Polymerisation der Polymerisationszone zuführt.

Als Initiatoren für die radikalische Polymerisation werden übliche Peroxo- oder Azoverbindungen eingesetzt. Dazu zählen z. B. Dibenzoylperoxid, tert.-Butylperpivalat, tert.-Butylper-2-ethylhexanoat, Di-tert.-butylperoxid, 2,5-Dimethyl-2,5-di(tert.-butylperoxy)hexan, aliphatische oder cycloaliphatische Azoverbindungen, z. B. 2,2'-Azobis(isobutyronitril), 2,2'-Azobis(2-methylbutyronitril), 2,2'-Azobis(2,4-dimethylvaleronitril), 1,1'-Azobis(1-cyclohexancarbonitril), 2-(Carbamoylazo)isobutyronitril, 4,4'-Azobis(4-cyanovaleriansäure) und deren Alkalimetall- und Ammoniumsalze, z. B. das Natriumsalz, Dimethyl-2,2'-azobisisobutyrat, 2,2'-Azobis[2-(2-imidazolin-2-yl)propan], 2,2'-Azobis(2-amidinopropan) und die Säureadditionssalze der beiden zuletzt genannten Verbindungen, z. B. die Dihydrochloride.

Ferner kommen als Initiatoren Wasserstoffperoxid, Hydroperoxide in Kombination mit Reduktionsmitteln und Persalze in Frage. Geeignete Hydroperoxide sind beispielsweise t-Butylhydroperoxid, t-Amylhydroperoxid, Cumolhydroperoxid und Pinanhydroperoxid jeweils in Kombination mit beispielsweise einem Salz der Hydroxymethansulfinsäure, einem Eisen (II)-Salz oder Ascorbinsäure. Geeignete Persalze sind insbesondere Alkalimetallperoxidisulfate.

Die verwendete Initiatormenge, bezogen auf die Monomere, liegt im Allgemeinen in einem Bereich von etwa 0,01 bis 2 Gew.-%, bezogen auf das Gesamtgewicht der zu polymerisierenden Monomere.

Zur Erzielung des gewünschten Molekulargewichts kann der Einsatz eines Reglers angebracht sein. Als Regler eignen sich beispielsweise Aldehyde, wie Formaldehyd, Acetaldehyd, Propionaldehyd, n-Butyraldehyd und Isobutyraldehyd, Ameisensäure, Ammoniumformiat, Hydroxylammoniumsulfat und Hydroxylammoniumphosphat. Weiterhin können Regler eingesetzt werden, die Schwefel in organisch gebundener Form enthalten, wie Di-n-butylsulfid, Di-n-octylsulfid, Diphenylsulfid etc., oder Regler, die Schwefel in Form von SH-Gruppen enthalten, wie n-Butylmercaptan, n-Hexylmercaptan oder n-Dodecylmercaptan. Geeignet sind auch wasserlösliche, schwefelhaltige polymerisationsregler, wie beispielsweise Hydrogensulfite und Disulfite. Weiterhin eignen sich als Regler Allylverbindungen, wie Allylalkohol oder Allylbromid, Benzylverbindungen, wie Benzylchlorid oder Alkylhalogenide, wie Chloroform oder Tetrachlormethan.

Gewünschtenfalls setzt man der Polymerlösung im Anschluss an die Polymerisationsreaktion einen oder mehrere Polymerisationsinitiatoren zu und erhitzt die Polymerlösung, z. B. auf die Polymerisationstemperatur oder auf Temperaturen oberhalb der Polymerisationstemperatur, um die Polymerisation zu vervollständigen. Geeignet sind die oben angegebenen Azoinitiatoren, aber auch alle anderen üblichen, für eine radikalische Polymerisation in wässriger Lösung geeignete Initiatoren, beispielsweise Peroxide, Hydroperoxide, Peroxodisulfate, Percarbonate, Peroxoester und Wasserstoffperoxid. Hierdurch wird die Polymerisationsreaktion zu einem höheren Umsatz, wie z. B. von 99,9 %, geführt.

Ein weiterer Gegenstand der Erfindung ist ein Verfahren zur Herstellung einer Polymerzusammensetzung wie zuvor beschrieben, bei dem man wenigstens eine Polyisobuten-haltige Komponente a) und wenigstens ein davon verschiedenes Polymer b) innig miteinander in Kontakt bringt.

Vorzugsweise umfasst die Komponente a) wenigstens ein Polyisobutenderivat und die Komponente b) wenigstens ein Polymer, die jeweils wenigstens eine zur Reaktion miteinander befähigte komplementäre funktionelle Gruppe aufweisen, und wobei das Inkontaktbringen unter Bedingungen erfolgt, unter denen zumindest ein Teil der funktionellen Gruppen reagiert.

Bezüglich der Herstellung der erfindungsgemäßen Polymerzusammensetzungen, beispielsweise durch Compoundierung mit oder ohne Lösungsmittel, Coextrusion oder Kneten wird auf Ullmann's Encyclopedia of Technical Chemistry, 6. Ausgabe, 2000 Electronic Edition, Kapitel "Polymer Blends" verwiesen, worauf hiermit im vollen Umfang Bezug genommen wird.

Die Erfindung wird anhand der folgenden, nicht einschränkenden Beispiele näher erläutert.

### Beispiele

### 1. Umsetzung eines Polyisobutens mit einem Styrol/Butadien-Copolymer nach Friedel-Crafts

15 g eines Polyisobutens mit einem zahlenmittleren Molekulargewicht Mₙ von 32000, einer Dispersizität PD von 2,0, einem α-Olefingehalt von 60 % und einem β-Olefingehalt von 33 % werden in 50 ml CHCl₃ gelöst. 100 g eines Copolymers aus Butadien und Styrol (Krylene 1500® von der Bayer AG) werden in 650 ml CHCl₃ gelöst. Die Lösungen werden in einem 2 1-Vierhalskolben gemischt. Es wird eine Probe entnommen und anschließend zu dem verbleibenden Ansatz 2,21 g BF₃-Phenolkomplex bei Raumtemperatur zugegeben. Der Ansatz wird 8 h im Temperaturbereich von 20 bis 30 °C gehalten und dann unter kräftigem Rühren in 3 l Isopropanol eingetragen, wobei das Polymer als grauweiße, gummielastische Masse ausfällt. Es wird über Nacht im Trockenschrank bei 70 °C, 200 mbar getrocknet: 102 g = 87 % Ausbeute. Die Probe wird analog aufgearbeitet.

Das ¹H-NMR-Spektrum der Probe zeigt zwei Vinylidenprotonensignale (δ = 4,7 und 4,8 ppm), welche im Produkt verschwunden sind. Nach 6 Wochen Lagerzeit schwitzt Polyisobuten aus der Probe aus (klebrige Oberfläche), während das Produkt unverändert ist.

### 2. Umsetzung eines Polyisobutens mit Phenol nach Friedel-Crafts

100 g (5,6 mmol) eines Polyisobutens (Mₙ = 18000, PD = 2,1, α-Olefingehalt 65 %, β-Olefingehalt 30 %) werden in 500 ml CHCl₃ gelöst. 2,4 g Phenol (25 mmol) werden in 10 ml CHCl₃ gelöst. Die Lösungen werden im 1 l-Vierhalskolben gemischt. Es werden 2,56 g (10 mmol) BF₃-Phenolkomplex bei Raumtemperatur zugegeben. Der Ansatz wird 8 h bei Raumtemperatur gerührt, dann unter kräftigem Rühren in 2 l Methanol eingetragen, wobei das Polymer als helle, zähe, elastische Masse ausfällt. Diese wird abgetrennt und über Nacht im Trockenschrank bei 70 °C, 200 mbar getrocknet: 95 g (= 94,5 % Ausbeute) 4-Polyisobutenylphenol.

Das ¹H-NMR-Spektrum der Probe in CD₂Cl₂ zeigt folgende Signale: 7,2 ppm (Dublett, 2H), 6,7 ppm (Dublett, 1,9H), 4,8 ppm (Singulett, 1H), 1,75 ppm (Singulett, 2H), 1,5 ppm (Singulett 660H), 1,05 ppm (Singulett 1950H).

### 3. Umsetzung eines Polyisobutens mit Maleinsäureanhydrid (En-Reaktion)

382 g (15 mmol) eines Polyisobutens (Mₙ = 25000, PD = 2,0, α-Olefingehalt 69 %, β-Olefingehalt 25 %) werden in einem 500 ml-Vierhalskolben mit aufgesetztem Luftkühler (30 cm) vorgelegt. Unter Stickstoff wird auf 170 °C aufgeheizt, dann wird 30 min. auf 5 mbar evakuiert. 2,6 g Maleinsäureanhydrid werden zugegeben und 130 min. bei 215 °C unter leichtem Stickstoffstrom gerührt. Dann werden weitere 2 g Maleinsäureanhydrid zugesetzt und weitere 110 min. bei 225 °C gerührt. Überschüssiges Maleinsäureanhydrid wird bei 180 °C 3 mbar am Rotationsverdampfer entfernt. Der Ansatz wird in Hexan gelöst, druckfiltriert und wieder am Rotationsverdampfer eingeengt (bis 180 °C 3 mbar). Es resultieren 360 g einer zähen, elastischen Masse aus Polyisobutenylsuccinsäureanhydrid; Ausbeute 94 %.

Das Infrarotspektrum der Probe zeigt die CO-Schwingungen (V_{co}) bei 1860 und 1779 cm⁻¹. Die Verseifungszahl (VZ) betrug 3,5.

### 4. Sulfonierung eines Polyisobutens

250 g (0,01 mol) eines Polyisobutens mit einer mittleren Molmasse von Mn = 25000 Dalton und einer Polydispersizität Mw/Mn = 2,0 und einem α-Olefingehalt von 69 % werden in 1 l n-Hexan gelöst. Bei 20 bis 25 °C werden 2 g (0,02 mol) Acetanhydrid zugegeben und anschließend 1,5 g (0,015 mol) Schwefelsäure. Man lässt über Nacht ausreagieren und bricht die Reaktion mit 200 ml Methanol ab. Die Methanolphase wird abgetrennt und es wird noch 3-mal mit 200 ml Methanol gewaschen. Die Hexanphase wird am Rotationsverdampfer bei 140 °C/5 mbar eingeengt. Es werden 248 g einer hellen, harzartigen, elastischen Masse erhalten.
¹H-NMR (in CDCl₃, 16 Scans bei 500 MHz):
5,4 ppm (Singulett, 0,9 H); 5,3 ppm (Singulett, 1,1 H); 3,8 ppm (Singulett, 1 H); 2,2 ppm (Singulett, 0,9 H); 1,5 ppm (Singulett, 890 H); 1,05 ppm (Singulett, 2680 H)

### 5. Umsetzung mit Thiolen

250 g (0,01 mol) eines Polyisobutens mit einer mittleren Molmasse von Mn = 25000 Dalton und einer Polydispersizität Mw/Mn = 2,0 und einem α-Olefingehalt von 69 % werden in 500 ml n-Hexan gelöst, dann werden 2 g (0,018 mol) Thiophenol zugesetzt. Die Reaktion wird durch Zugabe von 1,3 g BF₃-Phenolkomplex gestartet. Man lässt über Nacht ausreagieren (insgesamt 18 h) und bricht die Reaktion mit 200 ml Methanol ab. Die Methanolphase wird abgetrennt und es wird noch 3-mal mit 200 ml Methanol gewaschen. Die Hexanphase wird am Rotationsverdampfer bei 140 °C/5 mbar eingeengt. Es werden 245 g einer hellen, harzartigen, elastischen Masse erhalten: Polyisobutenyl, Phenylsulfan.
¹H-NMR (in CD₂Cl₂, 16 Scans bei 500 MHz):
7,5 ppm (Dublett mit Feinaufspaltung, 2 H); 7,3 ppm (überlagerte Tripletts, 3 H); 1,5 ppm (Singulett, 880 H); 1,05 ppm (Singulett, 2700 H)

### 6. Epoxid des Polyisobutens

Im 2 1-Vierhalskolben wird die Lösung von 500 g (0,02 mol) eines Polyisobutens mit einer mittleren Molmasse von Mn = 25000 Dalton und einer Polydispersizität Mw/Mn = 2,0 und einem α-Olefingehalt von 69 % in 600 ml Toluol vorgelegt. Anschließend erfolgt die Zugabe von 0,9 g (20 mmol) Ameisensäure. Es wird auf 80 °C erwärmt und 1,4 g (20 mmol) H₂O₂-Lösung zugetropft. Es wird 45 min. bei 90 °C gerührt. Die wässrige Phase wird nach Abkühlung auf Raumtemperatur abgetrennt. Anschließend wird 0,5 g (10 mmol) Ameisensäure zur organischen Lösung gegeben, erneut auf 80 °C erhitzt und 0,7 g (10 mmol) H₂O₂-Lösung zugetropft. Nach 1 h bei 90 °C wird die wässrige Phase abgetrennt und die organische Phase mit 100 ml gesättigte NaHCO₃-Lösung, 100 ml Wasser und 100 ml gesättigte FeSO₄·7H₂O-Lösung gewaschen. Die organische Phase wird bei 100 °C/5 mbar am Rotationsverdampfer eingeengt. 496 g Polyisobutenepoxid als helle, weichharzartige Masse.
¹H-NMR (in CD₂Cl₂, 16 Scans bei 500 MHz):
2,6 ppm (Dublett mit Feinaufspaltung, 0,7 H); 2,55 ppm (Dublett mit Feinaufspaltung, 0,7 H); 1,85 ppm (Singuletts, 3X0,3 H); 1,8 ppm (Singuletts, 3X0,3 H); 1,5 ppm (Singulett, 880 H), 1,05 ppm (Singulett, 2700 H)

### 7. Aminoalkyliertes Polyisobutenylphenol

580 g eines gemäß Beispiel 2 hergestellten Polyisobutenylphenols werden in 580 g Xylol gelöst und in einem 2 1-Vierhalskolben vorgelegt. Man setzt 7 g Formaldehydlösung (37 %) zu und rührt 30 min. bei 90 °C. Dann gibt man 10 g Dimethylaminlösung (40 %) zu und kreist bei 160 °C Wasser aus. Anschließend wird die Lösung am Rotationsverdampfer bei 140 °C/5 mbar eingeengt. Man erhält 567,5 g einer hochviskosen Flüssigkeit.

Nach 1H-NMR (FT-NMR, 500 MHz, 16 Scans, CD₂Cl₂) ist kein Polyisobutenylphenol mehr vorhanden.

Bei 3,6 ppm (Ar-CH₂-N(CH₃)₂) und 2,28 ppm (Ar-CH₂-N(CH₃)₂) sind neue Signale zu sehen, die einem N,N-Dimethyl-2-hydroxy-5-polyisobutenylbenzylamin entsprechen.

## Patentansprüche

1. Polymerzusammensetzung, enthaltend:
a) wenigstens eine Polyisobuten-haltige Komponente, die ausgewählt ist unter mittelmolekularem, reaktivem Polyisobuten mit einem zahlenmittleren-Molekulargewicht Mₙ im Bereich von 5000 bis 80000 Dalton und einem Gehalt an α- und/oder β ständigen Doppelbindungen von wenigstens 50 Mol-%, Derivaten dieses mittelmolekularen, reaktiven Polyisobutens und Mischungen davon,
b) wenigstens ein von a) verschiedenes Polymer
das ausgewählt ist unter:
- Polymeren, die
I) wenigstens eine Styrolverbindung der Formel 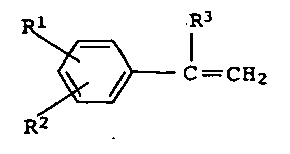 worin
R¹ und R² unabhängig voneinander für Wasserstoff, C₁-C₃₀₋Alkyl, Hydroxy, Alkoxy oder Halogen stehen, R³ für Wasserstoff oder C₁-C₈-Alkyl steht, und
II) gegebenenfalls wenigstens ein von I) verschiedenes, damit copolymerisierbares Monomer mit mindestens einer α,β-ethylenisch ungesättigten Doppelbindung,
einpolymerisiert enthalten, und
- Elastomeren mit einer Glasübergangstemperatur T_{G} von höchstens 0°C, ausgewählt unter Acrylatkautschuken (ACM), chlorsulfoniertem Polyethylen (A-CSM), Copolymeren von Alkylacrylaten mit Ethylen (AEM), Polyester-Urethanen (AU), bromierten Butylkautschuken (BIIR), Polybutadien (BR), chlorierten Butylkautschuken (CIIR), chloriertem Polyethylen (CM), Epichlorhydrin (CO), Polychloropren (CR), sulfuriertem Polyethylen (CSM), Ethylenoxid-Epichlorhydrin-Copolymeren (ECO), Ethylen-Acrylnitril-Copolymeren (ENM), epoxidierten Naturkautschuken (ENR), Ethylen-Propylen-Dien-Terpolymeren (EPDM), Ethylen-Propylen-Copolymeren (EPM), Polyether-Urethanen (EU), Ethylen-Vinylacetat-Copolymeren (EVM), Fluorkautschuken (FKM), Fluorsilicon-Kautschuken (FVMQ), Propylenoxid-Allylglycidylether-Copolymeren (GPO), Isobuten-Isopren-Copolymeren (IIR), Isoprenkautschuken (IR), Nitrilkautschuken (NBR), Naturkautschuk (NR), Thioplasten (OT), und Mischungen davon.

2. Zusammensetzung nach Anspruch 1, enthaltend als Komponente a) wenigstens ein Polyisobuten mit einem Gehalt an α- und/oder β-ständigen Doppelbindungen von mindestens 60 Mol-%.

3. Zusammensetzung nach Anspruch 1, enthaltend als Komponente a) wenigstens ein Polyisobutenderivat, das erhältlich ist durch Umsetzung wenigstens eines Teils der in einem mittelmolekularen, reaktiven Polyisobuten enthaltenen Doppelbindungen in einer ein- oder mehrstufigen Funktionalisierung, die ausgewählt ist unter:
i) Umsetzung mit einer Verbindung, die wenigstens eine aromatische oder heteroaromatische Gruppe aufweist in Gegenwart eines Alkylierungskatalysators unter Erhalt einer mit Polyisobuten alkylierten Verbindung,
ii) Umsetzung mit einer Peroxiverbindung unter Erhalt eines wenigstens teilweise epoxidierten Polyisobutens,
iii) Umsetzung mit einem Alken, das eine elektrophil substituierte Doppelbindung aufweist, in einer En-Reaktion,
iv) Umsetzung mit Kohlenmonoxid und Wasserstoff in Gegenwart eines Hydroformylierungskatalysators unter Erhalt eines wenigstens teilweise hydroformylierten Polyisobutens,
v) Umsetzung mit Schwefelwasserstoff oder einem Thiol unter Erhalt eines wenigstens teilweise mit Thiogruppen funktionalisierten Polyisobutens,
vi) Umsetzung mit einem Silan in Gegenwart eines Silylierungskatalysators unter Erhalt eines wenigstens teilweise mit Silylgruppen funktionalisierten Polyisobutens,
vii) Umsetzung mit einem Halogen oder einem Halogenwasserstoff unter Erhalt eines wenigstens teilweise mit Halogengruppen funktionalisierten Polyisobutens,
viii) Umsetzung mit einem Boran und anschließende oxidative Spaltung unter Erhalt eines wenigstens teilweise hydroxylierten Polyisobutens, und
ix) Umsetzung mit SO₃ oder einer zur Freisetzung von SO₃ befähigten Verbindung unter Erhalt eines wenigstens teilweise mit Sulfonsäuregruppen funktionalisierten Polyisobutens.

4. Zusammensetzung nach Anspruch 3, wobei man die in Schritt i) erhaltene Verbindung einer weiteren Funktionalisierung durch Umsetzung mit wenigstens einem Aldehyd und wenigstens einem Amin, das wenigstens eine primäre oder sekundäre Aminfunktion aufweist, unter Erhalt einer mit Polyisobuten alkylierten und zusätzlich wenigstens teilweise aminoalkylierten Verbindung unterzieht.

5. Zusammensetzung nach Anspruch 3, wobei man im Schritt iii) als Alken Maleinsäureanhydrid einsetzt und ein wenigstens teilweise mit Bernsteinsäureanhydridgruppen funktionalisiertes Polyisobuten erhält.

6. Zusammensetzung nach Anspruch 5, wobei man das teilweise mit Bernsteinsäureanhydridgruppen funktionalisierte Polyisobuten einer weiteren Funktionalisierung unterzieht, die ausgewählt ist unter:
α) Umsetzung mit wenigstens einem Amin unter Erhalt eines wenigstens teilweise mit Succinimidgruppen und/oder Succinamidgruppen funktionalisierten Polyisobutens,
β) Umsetzung mit wenigstens einem Alkohol unter Erhalt eines wenigstens teilweise mit Succinestergruppen funktionalisierten Polyisobutens, und
γ) Umsetzung mit wenigstens einem Thiol unter Erhalt eines wenigstens teilweise mit Succinthioestergruppen funktionalisierten Polyisobutens.

7. Zusammensetzung nach Anspruch 3, wobei man die in Schritt iv) erhaltenen hydroformylierten Polyisobutene einer weiteren Funktionalisierung unterzieht, die ausgewählt ist unter:
A) Umsetzung in Gegenwart eines Oxidationsmittels unter Erhalt eines wenigstens teilweise mit Carboxygruppen funktionalisierten Polyisobutens,
B) Umsetzung mit Wasserstoff in Gegenwart eines Hydrierkatalysators unter Erhalt eines wenigstens teilweise mit Alkoholgruppen funktionalisierten Polyisobutens,
C) Umsetzung mit Wasserstoff und Ammoniak oder einem primären oder sekundären Amin in Gegenwart eines Aminierungskatalysators unter Erhalt eines wenigstens teilweise mit Amingruppen funktionalisierten Polyisobutens.

8. Zusammensetzung nach Anspruch 3, wobei man das in Schritt ix) erhaltene, teilweise mit Sulfonsäuregruppen funktionalisierte Polyisobuten einer Neutralisierung mit einer Base unterzieht.

9. Zusammensetzung nach einem der vorhergehenden Ansprüche, wobei die Komponente b) ausgewählt ist unter Elastomeren mit einer Glasübergangstemperatur T_{G} von höchstens -10 °C.

10. Verfahren zur Herstellung einer Polymerzusammensetzung wie in einem der Ansprüche 1 bis 9 beschrieben, bei dem man wenigstens eine Polyisobuten-haltige Komponente a) und wenigstens ein davon verschiedenes Polymer b) innig miteinander in Kontakt bringt.

11. Verfahren nach Anspruch 10, wobei die Komponente a) wenigstens ein Polyisobutenderivat und die Komponente b) wenigstens ein Polymer umfasst, die jeweils wenigstens eine zur Reaktion miteinander befähigte komplementäre funktionelle Gruppe aufweisen und wobei das Inkontaktbringen unter Bedingungen erfolgt, unter denen zumindest ein Teil der funktionellen Gruppen reagiert.

## Claims

1. A polymer composition comprising:
a) at least one polyisobutene-containing component selected from among medium molecular weight, reactive polyisobutene having a number average molecular weight Mₙ in the range from 5000 to 80000 dalton and a content of α and/or β double bonds of at least 50 mol%, derivatives of this medium molecular weight, reactive polyisobutene and mixtures thereof,
b) at least one polymer which is different from a) and is selected from among:
- polymers which comprise, in polymerized/copolymerized form,
I) at least one styrene compound of the formula 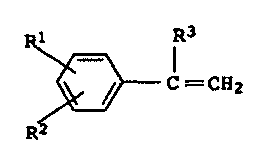 where
R¹ and R² are each, independently of one another, hydrogen, C₁-C₃₀-alkyl, hydroxy, alkoxy or halogen,
R³ is hydrogen or C₁-C₈-alkyl, and,
II) if appropriate, at least one monomer which is different from I), is copolymerizable therewith and has at least one α,β-ethylenically unsaturated double bond, and
- elastomers which have a glass transition temperature T_{G} of not more than 0°C and are selected from among acrylate rubbers (ACM), chlorosulfonated polyethylene (A-CSM), copolymers of alkyl acrylates with ethylene (AEM), polyester urethanes (AU), brominated butyl rubbers (BIIR), polybutadiene (BR), chlorinated butyl rubbers (CIIR), chlorinated polyethylene (CM), epichlorohydrin (CO), polychloroprene (CR), sulfurated polyethylene (CSM), ethylene oxide-epichlorohydrin copolymers (ECO), ethylene-acrylonitrile copolymers (ENM), epoxidized natural rubbers (ENR), ethylene-propylene-diene terpolymers (EPDM), ethylene-propylene copolymers (EPM), polyether urethanes (EU), ethylene-vinyl acetate copolymers (EVM), fluorinated rubbers (FKM), fluoro-silicone rubbers (FVMQ), propylene oxide-allyl glycidyl ether copolymers (GPO), isobutene-isoprene copolymers (IIR), isoprene rubbers (IR), nitrile rubbers (NBR), natural rubber (NR), thioplastics (OT), and mixtures thereof.

2. The composition according to claim 1, comprising, as component a), at least one polyisobutene having a content of α and/or β double bonds of at least 60 mol%.

3. The composition according to claim 1, comprising, as component a), at least one polyisobutene derivative which is obtainable by reaction of at least part of the double bonds comprised in a medium molecular weight, reactive polyisobutene in a single-stage or multistage functionalization selected from among:
i) reaction with a compound containing at least one aromatic or heteroaromatic group in the presence of an alkylation catalyst to give a compound alkylated by polyisobutene,
ii) reaction with a peroxy compound to give an at least partially epoxidized polyisobutene,
iii) reaction with an alkene which has an electrophilically substituted double bond in an ene reaction,
iv) reaction with carbon monoxide and hydrogen in the presence of a hydroformylation catalyst to give an at least partially hydroformylated polyisobutene,
v) reaction with hydrogen sulfide or a thiol to give a polyisobutene which is at least partially functionalized by thio groups,
vi) reaction with a silane in the presence of a silylation catalyst to give a polyisobutene which is at least partially functionalized by silyl groups,
vii) reaction with a halogen or a hydrogen halide to give an at least partially halogenated polyisobutene,
viii)reaction with a borane and subsequent oxidative cleavage to give an at least partially hydroxylated polyisobutene, and
ix) reaction with SO₃ or a compound capable of releasing SO₃ to give a polyisobutene which is at least partially functionalized by sulfo groups.

4. The composition according to claim 3, wherein the compound obtained in step i) is subjected to further functionalization by reaction with at least one aldehyde and at least one amine which has at least one primary or secondary amine function to give a compound which is alkylated by polyisobutene and additionally at least partially aminoalkylated.

5. The composition according to claim 3, wherein, in step iii), maleic anhydride is used as alkene and a polyisobutene which is at least partially functionalized by succinic anhydride groups is obtained.

6. The composition according to claim 5, wherein the polyisobutene which is partially functionalized by succinic anhydride groups is subjected to a further functionalization selected from among:
α) reaction with at least one amine to give a polyisobutene which is at least partially functionalized by succinimide groups and/or succinamide groups,
β) reaction with at least one alcohol to give a polyisobutene which is at least partially functionalized by succinic ester groups, and
γ) reaction with at least one thiol to give a polyisobutene which is at least partially functionalized by succinic thioester groups.

7. The composition according to claim 3, wherein the hydroformylated polyisobutenes obtained in step iv) are subjected to a further functionalization selected from among:
A) reaction in the presence of an oxidant to give a polyisobutene which is at least partially functionalized by carboxyl groups,
B) reaction with hydrogen in the presence of a hydrogenation catalyst to give a polyisobutene which is at least partially functionalized by alcohol groups,
C) reaction with hydrogen and ammonia or a primary or secondary amine in the presence of an amination catalyst to give a polyisobutene which is at least partially functionalized by amine groups.

8. The composition according to claim 3, wherein the polyisobutene which is obtained in step ix) and has been partially functionalized with sulfonic acid groups is subjected to neutralization with a base.

9. The composition according to any of the preceding claims, wherein the component b) is selected from among elastomers having a glass transition temperature T_{G} of not more than -10°C.

10. A process for preparing a polymer composition as described in any of claims 1 to 9 which comprises bringing at least one polyisobutene-containing component a) and at least one polymer b) which is different therefrom into intimate contact with one another.

11. The process according to claim 10, wherein the component a) comprises at least one polyisobutene derivative and the component b) comprises at least one polymer which each have at least one complementary functional group capable of reacting with the other and the components are brought into contact under conditions under which at least part of the functional groups react.

## Revendications

1. Composition polymère, contenant :
a) au moins un composant contenant du polyisobutène qui est choisi parmi du polyisobutène réactif de poids moléculaire moyen présentant un poids moléculaire moyen numérique Mₙ de l'ordre de 5 000 à 80 000 Daltons et une teneur en doubles liaisons en position α et/ou β d'au moins 50 % molaires, des dérivés de ce polyisobutène réactif de poids moléculaire moyen et leurs mélanges,
b) au moins un polymère différent de a) qui est choisi parmi :
- des polymères qui contiennent à l'état copolymérisé
I) au moins un composé de styrène de la formule 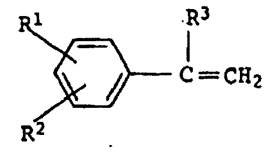 dans laquelle
R¹ et R² représentent, indépendamment l'un de l'autre, de l'hydrogène, de l'halogène, ou un groupe alkyle en C₁-C₃₀, hydroxy ou alcoxy,
R³ représente de l'hydrogène ou un groupe alkyle en C₁-C₈, et
II) éventuellement au moins un monomère différent de I), copolymérisable avec lui et comportant au moins une double liaison α,β-éthyléniquement insaturée,
et
- des élastomères présentant une température de transition vitreuse T_{G} d'au maximum 0°C, choisis parmi des caoutchoucs acryliques (ACM), du polyéthylène chlorosulfoné (A-CSM), des copolymères d'acrylates d'alkyle avec de l'éthylène (AEM), des polyester-uréthannes (AU), des caoutchoucs butyliques bromés (BIIR), du polybutadiène (BR), des caoutchoucs butyliques chlorés (CIIR), du polyéthylène chloré (CM), de l'épichlorhydrine (CO), du polychloroprène (CR), du polyéthylène sulfuré (CSM), des copolymères d'oxyde d'éthylène et d'épichlorhydrine (ECO), des copolymères d'éthylène et d'acrylonitrile (ENM), des caoutchoucs naturels époxydés (ENR), des terpolymères d'éthylène-propylène-diène (EPDM), des copolymères d'éthylène-propylène (EPM), des polyéther-uréthannes (EU), des copolymères d'éthylène-acétate de vinyle (EVM), des caoutchoucs fluorés (FKM), des caoutchoucs de fluorosilicone (FVMQ), des copolymères d'oxyde de propylène-éther allylglycidylique (GPO), des copolymères d'isobutène-isoprène (IIR), des caoutchoucs d'isoprène (IR), des caoutchoucs nitrile (NBR), des caoutchoucs naturels (NR), des thioplastes (OT) et leurs mélanges.

2. Composition suivant la revendication 1, contenant, comme composant a), au moins un polyisobutène ayant une teneur en doubles liaisons en position α et/ou β d'au moins 60 % molaires.

3. Composition suivant la revendication 1, contenant, comme composant a), au moins un dérivé de polyisobutène qui peut être obtenu par conversion d'au moins une partie des doubles liaisons contenues dans un polyisobutène réactif de poids moléculaire moyen en une fonctionnalisation en une ou plusieurs étapes, qui est choisie parmi :
i) une réaction avec un composé qui présente au moins un groupe aromatique ou hétéroaromatique, en présence d'un catalyseur d'alkylation, avec obtention d'un composé alkylé avec du polyisobutène,
ii) une réaction avec un composé peroxy, avec obtention d'un polyisobutène au moins partiellement époxydé,
iii) une réaction avec un alcène, qui présente une double liaison substituée de manière électrophile, en une ène-réaction,
iv) une réaction avec du monoxyde de carbone et de l'hydrogène en présence d'un catalyseur d'hydroformylation, avec obtention d'un polyisobutène au moins partiellement hydroformylé,
v) une réaction avec du sulfure d'hydrogène ou un thiol, avec obtention d'un polyisobutène au moins partiellement fonctionnalisé par des groupes thio,
vi) une réaction avec un silane en présence d'un catalyseur de silylation, avec obtention d'un polyisobutène au moins partiellement fonctionnalisé par des groupes silyle,
vii) une réaction avec un halogène ou un halogénure d'hydrogène, avec obtention d'un polyisobutène au moins partiellement fonctionnalisé par des groupes halogène,
viii) une réaction avec un borane et une dissociation ultérieure par oxydation, avec obtention d'un polyisobutène au moins partiellement hydroxylé, et
ix) une réaction avec SO₃ ou un composé capable de libérer du SO₃, avec obtention d'un polyisobutène au moins partiellement fonctionnalisé par des groupes acide sulfonique.

4. Composition suivant la revendication 3, dans laquelle on soumet le composé obtenu dans l'étape i) à une fonctionnalisation supplémentaire par réaction avec au moins un aldéhyde et au moins une amine qui présente au moins une fonction amine primaire ou secondaire, avec obtention d'un composé alkylé avec du polyisobutène et en supplément au moins partiellement aminoalkylé.

5. Composition suivant la revendication 3, dans laquelle on met en oeuvre dans l'étape iii) de l'anhydride maléique comme alcène et on obtient un polyisobutène au moins partiellement fonctionnalisé par des groupes anhydride succinique.

6. Composition suivant la revendication 5, dans laquelle on soumet le polyisobutène partiellement fonctionnalisé par des groupes anhydride succinique à une fonctionnalisation supplémentaire qui est choisie parmi :
α) une réaction avec au moins une amine, avec obtention d'un polyisobutène au moins partiellement fonctionnalisé par des groupes succinimide et/ou des groupes succinamide,
β) une réaction avec au moins un alcool, avec obtention d'un polyisobutène au moins partiellement fonctionnalisé par des groupes ester succinique, et
γ) une réaction avec au moins un thiol, avec obtention d'un polyisobutène au moins partiellement fonctionnalisé par des groupes thioester succinique.

7. Composition suivant la revendication 3, dans laquelle on soumet les polyisobutènes hydroformylés obtenus dans l'étape iv) à une fonctionnalisation supplémentaire qui est choisie parmi :
A) une réaction en présence d'un oxydant, avec obtention d'un polyisobutène au moins partiellement fonctionnalisé par des groupes carboxy,
B) une réaction avec de l'hydrogène en présence d'un catalyseur d'hydrogénation, avec obtention d'un polyisobutène au moins partiellement fonctionnalisé par des groupes alcool,
C) une réaction avec de l'hydrogène et de l'ammoniac ou une amine primaire ou secondaire en présence d'un catalyseur d'amination, avec obtention d'un polyisobutène au moins partiellement fonctionnalisé par des groupes amine.

8. Composition suivant la revendication 3, dans laquelle on soumet le polyisobutène partiellement fonctionnalisé par des groupes acide sulfonique, obtenu dans l'étape ix), à une neutralisation avec une base.

9. Composition suivant l'une des revendications précédentes, dans laquelle le composant b) est choisi parmi des élastomères présentant une température de transition vitreuse T_{G} d'au maximum -10°C.

10. Procédé de préparation d'une composition polymère telle qu'indiquée dans l'une des revendications 1 à 9, dans lequel on amène en contact mutuel intime au moins un composant contenant du polyisobutène a) et au moins un polymère différent de celui-ci b).

11. Procédé suivant la revendication 10, dans lequel le composant a) comporte au moins un dérivé de polyisobutène et le composant b) au moins un polymère qui présentent chacun au moins un groupe fonctionnel complémentaire susceptible d'une réaction entre eux et dans lequel la mise en contact a lieu dans des conditions dans lesquelles au moins une partie des groupes fonctionnels réagit.
